# EUROPÄISCHE PATENTSCHRIFT

(11) **EP 3 559 603 B1**
(45) Veröffentlichungstag und Bekanntmachung des Hinweises auf die Patenterteilung: **25.08.2021**
(21) Anmeldenummer: 17801464.3
(22) Anmeldetag: 22.11.2017
(51) Int. Cl.: G01F 1/58, G01F 1/60

(54) **VERFAHREN ZUM BETREIBEN EINES MAGNETISCH-INDUKTIVEN DURCHFLUSSMESSGERÄTS UND DURCHFLUSSMESSGERÄT**
METHOD FOR OPERATING A MAGNETIC/INDUCTIVE FLOW METER AND MAGNETIC/INDUCTIVE METER
PROCÉDÉ PERMETTANT DE FAIRE FONCTIONNER UN DÉBITMÈTRE À INDUCTION MAGNÉTIQUE ET DÉBITMÈTRE À INDUCTION MAGNÉTIQUE

(30) Priorität: 20.12.2016 DE 102016124976
(43) Veröffentlichungstag der Anmeldung: 30.10.2019
(73) Patentinhaber: Endress+Hauser Flowtec AG, 4153 Reinach (CH)
(72) Erfinder: KÜNG, Thomas, CH-4142 Münchenstein (CH); BÄHR, Günther, 4106 Therwil (CH)
(74) Vertreter: Andres, Angelika Maria
(86) Internationale Anmeldenummer: PCT/EP2017/080056
(87) Internationale Veröffentlichungsnummer: WO 2018/114189

(56) Entgegenhaltungen:
- EP-A1- 2 372 317
- DE-A1-102014 119 453
- JP-A- H06 273 205
- JP-A- S58 115 323
- JP-A- S58 120 118
- JP-A- 2004 354 205
- JP-B2- 3 334 995
- US-A- 4 651 286
- US-A- 5 905 206

## Beschreibung

Die Erfindung betrifft ein Verfahren zum Betreiben eines magnetisch-induktiven Durchflussmessgeräts zur Messung der Durchflussgeschwindigkeit oder des Volumendurchflusses eines Mediums in einem Messrohr und ein solches Durchflussmessgerät.

Magnetisch-induktive Durchflussmessgeräte werden bereits seit langer Zeit zur Durchflussmessung eingesetzt. Das Prinzip der magnetisch-induktiven Durchflussmessung basiert auf der Induktion einer durchflussabhängigen elektrischen Spannung in einem leitfähigen, durch ein Messrohr fließendes Medium durch ein Magnetfeld, welches Magnetfeld senkrecht zur Flussrichtung ausgerichtet ist. Das Magnetfeld wird üblicherweise durch ein Spulensystem mit einer oder mehreren Spulen erzeugt. Die durchflussabhängige Spannung wird von mindestens zwei Messelektroden abgegriffen und von einer Messvorrichtung ausgewertet. Somit lässt sich aus der gemessenen Spannung und dem bekannten Magnetfeld der Durchfluss des Mediums durch die Rohrleitung bestimmen. Üblicherweise wird das Medium mit Magnetfeldern wechselnder Polarität beaufschlagt, um Störeffekte zu minimieren, welche unabhängig von einer Anwesenheit eines Magnetfelds zu einer messbaren Spannung zwischen den Messelektroden führen und somit eine Durchflussmessung verfälschen. Die Schrift DE10312058A1 beschreibt ein solches Durchflussmessgerät. Eine weitere Möglichkeit Störeffekte zu erfassen ist, zwischen Phasen mit Magnetfeld Ruhephasen ohne Magnetfeld einzurichten und die Störeffekte zu messen. Dies wird in den Schriften US4597295A und JP 06 273205 A vorgeschlagen.

Nachteilhaft an beiden Umsetzungen ist die Tatsache, dass nach einem Wechsel zu einem Magnetfeld umgekehrter Polarität bzw. bei einem Wechsel zwischen einer Phase mit Magnetfeld und einer Ruhephase mit einer Durchflussmessung bzw. einer Messung der Störeffekte gewartet werden muss, bis das Durchflussmessgerät einen eingeschwungenen Zustand erreicht. Somit geht wertvolle Zeit verloren, welche nicht für eine Durchflussmessung zur Verfügung steht. Aufgabe der Erfindung ist es daher, ein Verfahren zum Betreiben eines magnetisch-induktiven Durchflussmessgeräts und ein solches Durchflussmessgerät vorzuschlagen, durch welche der Zeitverlust minimiert wird.

Die Aufgabe wird gelöst durch ein Verfahren gemäß dem unabhängigen Anspruch 1 sowie durch ein magnetisch-induktives Durchflussmessgerät gemäß dem unabhängigen Anspruch 15.

Bei einem erfindungsgemäßen Verfahren zum Betreiben eines magnetisch-induktiven Durchflussmessgeräts zur Messung der Durchflussgeschwindigkeit oder des Volumendurchflusses eines Mediums in einem Messrohr,
welches magnetisch-induktive Durchflussmessgerät umfasst:
ein Messrohr zum Führen des Mediums;
ein Magnetsystem mit mindestens einem Spulensystem zum Erzeugen eines Magnetfelds im Medium, wobei das Magnetfeld im Wesentlichen senkrecht zu einer Messrohrachse steht, wobei das Magnetfeld durch Anlegen einer elektrischen Spulenspannung an das Spulensystem hervorgerufen wird;
mindestens ein Paar im Messrohr angeordnete Messelektroden zum Erfassen einer durch das Magnetfeld induzierten Elektrodenspannung im Medium, welche Elektrodenspannung im Wesentlichen proportional zur Durchflussgeschwindigkeit und zur Feldstärke des Magnetfelds ist, wobei die Elektrodenspannung durch eine Ladungsträgertrennung hervorgerufen wird, welche durch den Durchfluss des Mediums durch das Magnetfeld verursacht wird;
eine Mess-/Betriebsschaltung zum Betreiben des Magnetsystems und zum Auswerten der Elektrodenspannung;
wird während einer Speisephase das Magnetfeld erzeugt und die Elektrodenspannung erfasst,
wobei die Speisephase eine Messphase aufweist, in welcher Messphase das Magnetfeld im Wesentlichen konstant ist, wobei ein Messwert der Elektrodenspannung während der Messphase zur Berechnung des Durchflusses des Mediums herangezogen wird;
wobei während einer anschließenden Speisephase ein Magnetfeld umgekehrter Polarität erzeugt wird,
wobei in einem ersten Verfahrensschritt bei einer Auswahl von Speisephasenwechseln zwischen einer vorausgehenden Speisephase und einer anschließenden Speisephase eine Ruhephase eingerichtet wird, in welcher Ruhephase zumindest teilweise keine elektrische Spulenspannung an das Spulensystem angelegt wird;
wobei in einem zweiten Verfahrensschritt die Elektrodenspannung während der Ruhephase erfasst wird;
wobei das Wechseln des Magnetfeld zwischen unterschiedlichen Phasen das Entstehen eines elektrischen Spannungspulses im Medium verursacht, wobei jede Phase eine Speisephase oder eine Ruhephase sein kann,
wobei in einem dritten Verfahrensschritt eine Information aus einem Spannungspuls der Ruhephase dazu verwendet wird, eine Störung der Elektrodenspannung während einer Speisephase durch einen Spannungspuls während der Speisephase zu ermitteln,
wobei nach Ermitteln der Störung der Verlauf der Elektrodenspannung während der der Ruhephase vorausgehenden Speisephase und/oder der der Ruhephase nachfolgenden Speisephase in Abhängigkeit von der Störung korrigiert wird,
wobei eine Korrektur der Störung ein Fitten des Verlaufs eines Spannungspulses mindestens einer Ruhephase beinhaltet,
wobei die Fitfunktion Information über Zeitpunkt und Amplitude eines Spannungspulsmaximums und/oder Verlauf des Amplitudenabfalls des Spannungspulses und/oder Zeitpunkt des Erreichens eines Endzustands und/oder Eigenschaften des Endzustands und/oder eine Pulsbreite des Spannungspulses gibt,
wobei die Störung anhand der durch die Fits gewonnenen Fitparameter ermittelt wird,
wobei der Endzustand ein Zustand eines eingeschwungenen Messsystems ist,
wobei ein Messwert einer ersten Impedanz eines Stromkreises umfassend die Messelektroden sowie Zuleitungen der Messelektroden zur Mess/Betriebsschaltung sowie das Medium und/oder einer zweiten Impedanz des Mediums beim Fitten bzw. bei einer Auswahl der Fitfunktion herangezogen wird.

Insbesondere muss nicht bei jedem Speisephasenwechsel eine Ruhephase eingerichtet werden, beispielsweise kann bei jedem n-ten Speisephasenwechsel eine Ruhephase eingerichtet werden, wobei n eine positive natürliche Zahl ist. Es kann auch eine unregelmäßige Abfolge von Ruhephasen eingerichtet werden, wobei die Unregelmäßigkeit beispielsweise auf einem Zufallsalgorithmus basiert.

Das Magnetsystem kann zusätzlich zu dem mindestens einen Spulensystem auch eine Feldrückführung zum Leiten des Magnetfelds außerhalb des Messrohrs aufweisen. Des Weiteren kann das Magnetsystem mindestens einen Polschuh aufweisen, welcher dazu eingerichtet ist, das Magnetfeld zwischen Spulensystem und Messrohr zu leiten. Das mindestens eine Spulensystem kann jeweils einen Spulenkern aufweisen.

Die Elektrodenspannung entsteht dabei durch eine durch den Durchfluss des Mediums durch das Messrohr durch das Magnetfeld verursachte Ablenkung von Ladungsträgern, wobei die Ablenkungsrichtung von der Polarität der Ladungsträger abhängig ist. Somit entsteht eine Trennung von positiv geladenen von negativ geladenen Ladungsträgern und somit eine elektrische Spannung.

Die Fitfunktion kann dabei unter rein mathematischen Gesichtspunkten ausgewählt sein. Es können aber auch physikalische oder technische Gegebenheiten bei der Auswahl der Fitfunktion und/oder bei einer Einschränkung von Parametern der Fitfunktion herangezogen werden.

In einer Ausgestaltung des Verfahrens wird eine gemittelte Störung durch Mittelung der ermittelten Störungen mindestens zweier Ruhephasen berechnet, wobei nach Berechnen der gemittelten Störung der Wert der Elektrodenspannung bzw. der Messwert der Elektrodenspannung einer Speisephase korrigiert wird.

In einer Ausgestaltung des Verfahrens wird die Elektrodenspannung während der Speisephase bzw. während der Ruhephase mindestens zweimal, und insbesondere mindestens zwanzigmal und bevorzugt mindestens fünfzigmal abgetastet.

In einer Ausgestaltung des Verfahrens beinhaltet eine Korrektur der Störung eine Subtraktion eines Verlaufs eines Spannungspulses einer Ruhephase von einem Verlauf der Elektrodenspannung während einer Speisephase.

In einer Ausgestaltung des Verfahrens greift der Fit zumindest in einem ersten Zeitintervall auf eine Funktion mit einem globalen Extremum zurück.

In einer Ausgestaltung des Verfahrens greift der Fit zumindest in einem zweiten Zeitintervall auf eine monoton fallende Funktion, beispielsweise eine Potenzfunktion zurück.

In einer Ausgestaltung des Verfahrens werden die Fitfunktionen bzw. Fitfunktionsparameter mittels einer Look-Up-Table ausgewählt.

In einer Ausgestaltung des Verfahrens wird der Messwert der ersten Impedanz mittels der Messelektroden und/oder wobei der Messwert der zweiten Impedanz mittels einer Impedanzsonde bestimmt, wobei die Impedanzsonde beispielsweise zum magnetisch-induktive Durchflussmessgerät gehört. Die Impedanzsonde kann aber auch eine externe Sonde sein, deren Messwert über eine Schnittstelle der Mess/Betriebsschaltung übermittelt wird.

In einer Ausgestaltung des Verfahrens wird mindestens gerätetypischer und/oder ein exemplartypischer und/oder ein applikationsspezifischer Parameter beim Fitten bzw. bei der Auswahl der Fitfunktion herangezogen.

In einer Ausgestaltung des Verfahrens ist n wählbar, wobei ein Auswahlkriterium ein Durchfluss bzw. eine Durchflussänderung des Mediums ist.

In einer Ausgestaltung des Verfahrens weichen die Beträge der Magnetfelder der Messphasen benachbarter Speisephasen weniger als 1% und insbesondere weniger als 0.1 % voneinander ab.

In einer Ausgestaltung des Verfahrens gehen die der Berechnung der gemittelten Störung zugrundeliegenden Ruhephasen der ersten Speisephase voraus.

In einer Ausgestaltung des Verfahrens gehen die der Berechnung der gemittelten Störung zugrundeliegenden Ruhephasen der ersten Speisephase zumindest teilweise voraus, wobei die der Berechnung der gemittelten Störung zugrundeliegenden Ruhephasen der ersten Speisephase zumindest teilweise nachfolgen.

In einer Ausgestaltung des Verfahrens wird eine Differenz von korrigierten Messwerten der Elektrodenspannung bzw. eine Differenz korrigierter Elektrodenspannungen der Messphasen zweier aufeinanderfolgender Speisephasen oder einer Messphase und einer der Messphase vorausgehenden oder nachfolgenden Ruhephase dazu verwendet wird, einen Durchflussmesswert zu ermitteln.

Ein erfindungsgemäßes magnetisch-induktives Durchflussmessgerät zur Messung der Durchflussgeschwindigkeit oder des Volumendurchflusses eines Mediums in einem Messrohr umfasst:
ein Messrohr, welches dazu eingerichtet ist, das Medium zu führen;
ein Magnetsystem mit mindestens einem Spulensystem, welches Magnetsystem dazu eingerichtet ist, ein Magnetfeld im Medium zu erzeugen, wobei das Magnetfeld im Wesentlichen senkrecht zu einer Messrohrachse steht;
mindestens ein Paar im Messrohr angeordnete Messelektroden, welche dazu eingerichtet sind, eine durch das Magnetfeld induzierte Spannung im Medium zu erfassen, welche Spannung im Wesentlichen proportional zur Durchflussgeschwindigkeit und zur Feldstärke des Magnetfelds ist;
eine Mess-/Betriebsschaltung, welche dazu eingerichtet ist, das erfindungsgemäße Verfahren umzusetzen, das Magnetsystem zu betreiben und die durch das Paar Messelektroden erfasste Spannung auszuwerten.

In einer Ausgestaltung weist das Durchflussmessgerät eine Impedanzsonde zum Erfassen der Impedanz des Mediums auf.

In einer Ausgestaltung des Durchflussmessgeräts weist die Mess/Betriebsschaltung eine Schnittstelle zur Übermittelung bzw. Annahme von Information bezüglich einer extern bestimmten Impedanz des Mediums auf.

In einer Ausgestaltung umfasst das Magnetsystem mindestens eine Feldrückführung, welche dazu eingerichtet ist, das Magnetfeld außerhalb des Messrohrs zwischen der dem Spulensystem gegenüberliegenden Messrohrseite und dem Spulensystem zumindest teilweise zu führen.

Im Folgenden wird die Erfindung anhand von Ausführungsbeispielen beschrieben.
Fig. 1 skizziert einen schematischen Verfahrensablauf zum Betreiben eines magnetisch-induktiven Durchflussmessgeräts.
Fig. 2 skizziert einen beispielshaften Ausschnitt aus Verläufen von Magnetfeldern und Elektrodenspannungen.
Fig. 3 zeigt einen beispielhaften Querschnitt durch ein erfindungsgemäßes magnetisch-induktives Durchflussmessgerät.

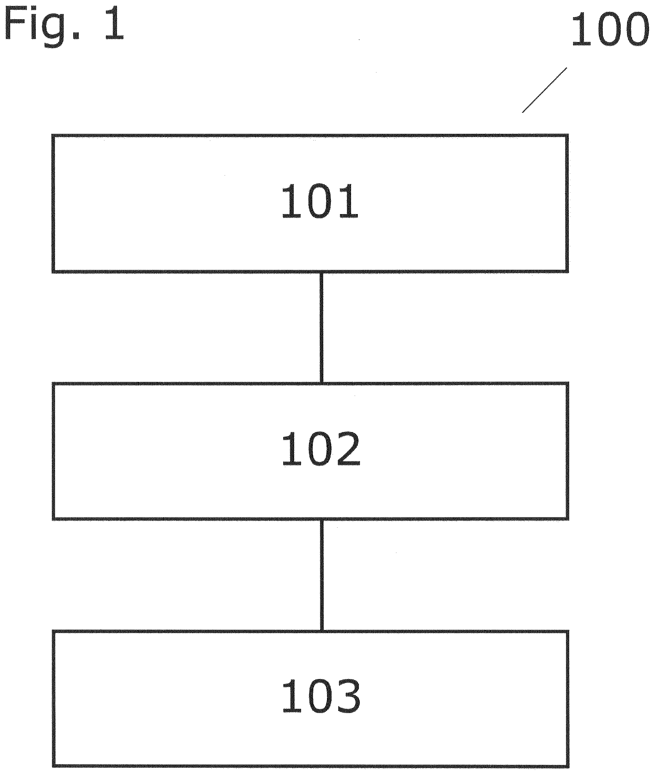

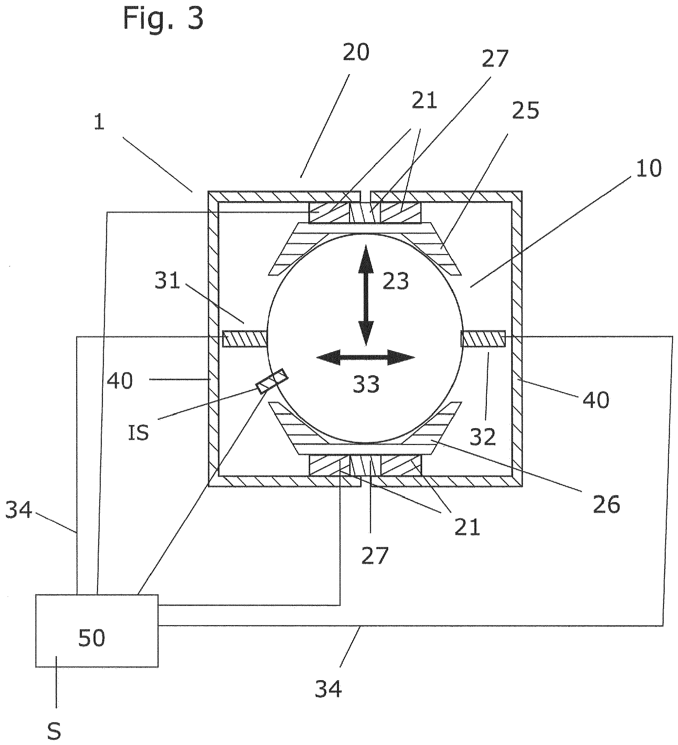

Fig. 1 skizziert einen Ablauf eines erfindungsgemäßen Verfahrens 100 zum Betreiben eines magnetisch-induktiven Durchflussmessgeräts (1). Ein solches Durchflussmessgerät umfasst wie in Fig. 3 beschrieben:
ein Messrohr (10) zum Führen des Mediums;
ein Magnetsystem (20) mit mindestens einem Spulensystem (20, 21) zum Erzeugen eines Magnetfelds im Medium, wobei das Magnetfeld im Wesentlichen senkrecht zu einer Messrohrachse steht, wobei das Magnetfeld durch Anlegen einer elektrischen Spulenspannung an das Spulensystem hervorgerufen wird;
mindestens ein Paar im Messrohr angeordnete Messelektroden (31, 32) zum Erfassen einer durch das Magnetfeld induzierten Elektrodenspannung im Medium, welche Elektrodenspannung im Wesentlichen proportional zur Durchflussgeschwindigkeit und zur Feldstärke des Magnetfelds ist;
und eine Mess-/Betriebsschaltung zur Umsetzung des erfindungsgemäßen Verfahrens.

Während des Betriebs des Durchflussmessgeräts wird während einer Speisephase das Magnetfeld erzeugt und die Elektrodenspannung erfasst, wobei die Speisephase eine Messphase aufweist, in welcher Messphase das Magnetfeld im Wesentlichen konstant ist, wobei ein Messwert der Elektrodenspannung während der Messphase zur Berechnung des Durchflusses des Mediums herangezogen wird.

Während einer anschließenden Speisephase wird ein Magnetfeld umgekehrter Polarität erzeugt.

In einem ersten erfindungsgemäßen Verfahrensschritt 101 wird bei einer Auswahl von Speisephasenwechseln zwischen einer vorausgehenden Speisephase und einer anschließenden Speisephase eine Ruhephase eingerichtet, in welcher Ruhephase zumindest teilweise keine elektrische Spulenspannung an das Spulensystem angelegt wird.

Insbesondere muss nicht bei jedem Speisephasenwechsel eine Ruhephase eingerichtet werden, beispielsweise kann bei jedem n-ten Speisephasenwechsel eine Ruhephase eingerichtet werden, wobei n eine positive natürliche Zahl ist. Es kann auch eine unregelmäßige Abfolge von Ruhephasen eingerichtet werden, wobei die Unregelmäßigkeit beispielsweise auf einem Zufallsalgorithmus basiert. Bei einem Abfüllvorgang kann es von Vorteil sein, Ruhephasen nur abschnittsweise einzurichten, wobei in einer Anfangsphase und in einer Endphase des Abfüllvorgangs aufgrund starker Änderungen des Durchflusses auf Ruhephasen verzichtet werden kann, und wobei in einer Zwischenphase des Abfüllvorgangs Ruhephasen eingerichtet werden. Eine unregelmäßige Abfolge von Ruhephasen schwächt Aliasingeffekte ab.

In einem zweiten erfindungsgemäßen Verfahrensschritt 102 wird die Elektrodenspannung während der Ruhephase erfasst;
Das Wechseln zwischen unterschiedlichen Phasen verursacht das Entstehen eines elektrischen Spannungspulses im Medium, welche Phasen Speisephasen oder Ruhephasen sind,
In einem dritten erfindungsgemäßen Verfahrensschritt 103 wird eine Störung der Elektrodenspannung in einer Speisephase auf Basis einer Information aus einem Spannungspuls während der Ruhephase berechnet wird.

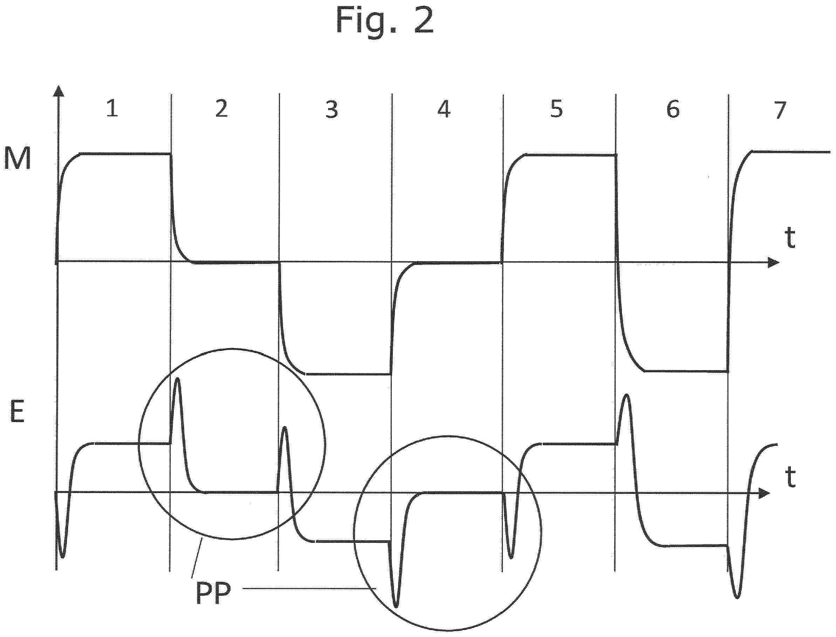

Fig. 2 skizziert einen beispielshaften und schematischen Ausschnitt aus Verläufen von Magnetfeldern und Elektrodenspannungen über eine Zeit t über mehrere Phasen hinweg, wobei eine obere Kurve M den Verlauf von Magnetfeldern während Phasen 1 bis 7 zeigt, und wobei eine untere Kurve E den Verlauf von Elektrodenspannungen während der Phasen 1 bis 7 zeigt. Der Verlauf der Magnetfelder bzw. Elektrodenspannungen während einer einzelnen Phase ist geprägt von einem Einschwingen in einen Endzustand zu Beginn der Phase und von einem Bleiben im Endzustand nach Beenden des Einschwingens, wobei die Einschwingdauer der Magnetfelder kürzer ist als die Einschwingdauer der Elektrodenspannungen. Ein Endzustand ist erreicht, sobald ein Einschwingen messtechnisch nicht mehr festgestellt werden kann. Die Elektrodenspannungen während der Endzustände sind dabei durchflussabhängig. Dies ist dadurch begründet, dass die Elektrodenspannungen auf die Magnetfelder reagieren, wobei diese Reaktionen dann des Weiteren Grenzschichteffekte an den Grenzflächen Medium - Messelektrode hervorrufen, welche eine von der Leitfähigkeit des Mediums abhängige Einschwingdauer aufweisen, welche häufig länger ist, als die Einschwingdauer der Magnetfelder. Der Wert der Elektrodenspannung während des Endzustands ist dabei durch den aktuellen Durchfluss des Mediums gegeben. Während einer Speisephase, siehe Phasen 1, 3, 5, 6 und 7 wird das Medium durch das Magnetsystem mit einem zumindest abschnittsweise konstanten Magnetfeld beaufschlagt, wobei das Magnetfeld durch Ansteuern eines Spulensystems mit einem Spulenstrom erzeugt wird. Während einer Ruhephase, siehe Phasen 2 und 4 wird eine Spulenspannung abgeschaltet, so dass das Magnetfeld gegen Null sinkt. Der Wert der Elektrodenspannung während eines Endzustands einer Ruhephase gibt Auskunft über Einflüsse auf die Elektrodenspannung, welche nicht auf ein statisches Magnetfeld während der Speisephase zurückzuführen sind.

Zur Messung eines Durchflusses wird eine Elektrodenspannung bzw. ein Messwert einer Elektrodenspannung zumindest während eines Endzustands einer Speisephase bzw. während einer Ruhephase herangezogen. Genauer wird zur Messung des Durchflusses eine Differenz von Messwerten der Elektrodenspannung bzw. eine Differenz von Elektrodenspannungen zweier aufeinanderfolgender Speisephasen oder einer Speisephase und einer der Speisephase vorausgehenden oder nachfolgenden Ruhephase dazu verwendet, einen Durchflussmesswert zu ermitteln.

Die Elektrodenspannung nach einem Schaltvorgang des Magnetsystems hängt nicht nur von der Dynamik des Magnetsystems, sondern auch vom dynamischen Verhalten der Grenzschichten ab. Die Dynamik der Elektrodenspannung wird durch das Magnetfeld, sowie der Änderung des Magnetfelds bei Phasenwechsel und durch die Wirkung der Grenzschicht an der Grenzfläche Messelektrode - Medium beeinflusst. Mit Umschalten zeigt die Elektrodenspannung einen Spannungspuls, welcher in einen Zustand mit im Wesentlichen konstanter Spannung abklingt, wobei das Abklingen unter anderem aus einem Abklingen der Spannung über der Grenzschicht resultiert, wobei der Spannungspuls als Resultat der Änderung des Magnetfelds und der Ladung einer Grenzschichtkapazität eine Störung der Elektrodenspannung darstellt. Die Polarität eines Spannungspulses ist abhängig von der Polarität der Änderung des Magnetfelds mit Phasenwechsel, so dass bei zwei aufeinanderfolgenden Phasenwechseln mit einer Magnetfeldänderung gleicher Polarität jeweils ein Spannungspuls gleicher Polarität auftritt, welche Spannungspulse ein Pulspaar PP darstellen. Dies ist skizziert bei den Phasenwechseln von Phase 1 nach Phase 2 und beim Wechsel von Phase 2 nach Phase 3, sowie bei den Phasenwechseln von Phase 3 nach Phase 4 und beim Wechsel von Phase 4 nach Phase 5.

Bei Verfahren zum Betreiben eines magnetisch-induktiven Durchflussmessgeräts nach dem Stand der Technik wird mit dem Erfassen einer Elektrodenspannung bzw. eines Messwerts einer Elektrodenspannung zur Berechnung eines Durchflusses gewartet, bis das Einschwingen der Elektrodenspannung erfolgt ist, woraus folgt, dass die Einschwingphase für eine Durchflussmessung nutzlos ist.

Durch Ermitteln des Spannungsverlaufs der Elektrodenspannung während einer Ruhephase lässt sich die Störung der Elektrodenspannung während einer Speisephase durch einen Spannungspuls korrigieren, da der Spannungspuls während einer Ruhephase das Wesentliche der Störung zeigt. Die Korrektur der Elektrodenspannung während der Speisephase ermöglicht das Heranziehen der Elektrodenspannung während der Einschwingphase der Elektrodenspannung zu einer Durchflussmessung, so dass entweder eine Zeitdauer einer Speisephase verkürzt werden kann oder der zu einer Durchflussmessung heranziehbare Anteil einer Speisephase vergrößert werden kann. Beide Varianten ermöglichen eine Verbesserung des Signal-zu-Rauschen-Verhältnisses der Durchflussmessung. Üblicherweise wird die Elektrodenspannung während einer Speisephase bzw. während einer Ruhephase mehrfach abgetastet. In einer einfachen Variante der Korrektur wird ein Verlauf der Elektrodenspannung während einer Ruhephase von einem Verlauf der Elektrodenspannung während einer Speisephase subtrahiert. Um den Verlauf der Elektrodenspannung während einer Ruhephase besser zu erfassen, kann in einer Ausgestaltung des Verfahrens eine Mittelung von Verläufen der Elektrodenspannung mehrerer Ruhephasen durchgeführt werden, um den Verlauf der Elektrodenspannung während einer Speisephase zu korrigieren. In einer Ausgestaltung des Verfahrens kann der Verlauf der Elektrodenspannung während einer Ruhephase gefittet werden, wobei die Korrektur des Verlaufs der Elektrodenspannung während einer Speisephase auf den durch den Fit bestimmten Fitparametern basiert. Hierbei wird beispielsweise ein durch die Fitparameter charakterisierter Funktionsverlauf vom Verlauf einer Elektrodenspannung während einer Speisephase subtrahiert. Es können auch Fits bzw. Fitparameter von Verläufen der Elektrodenspannung mehrerer Ruhephasen gemittelt werden. Beispielsweise kann eine zum Fitten des Verlaufs der Elektrodenspannung während einer Ruhephase verwendete Funktion aus einer Look-Up-Table herausgesucht werden, in welcher Look-Up-Table mindestens ein gerätetypische und/oder mindestens ein exemplartypischer und/oder mindestens ein applikationsspezifischer Parameter abgelegt sind, welche Parameter mit geeigneten Fitfunktionen und/oder Fitfunktionsparameter verknüpft sind.

Das Fitten kann auch einen Messwert einer ersten Impedanz und oder einer zweiten Impedanz miteinbeziehen, wobei die erste Impedanz die Impedanz eines Stromkreises umfassend die Messelektroden sowie das Medium ist, und wobei die zweite Impedanz eine Impedanz des Mediums ist.

Nach Subtraktion des Funktionsverlaufs vom Verlauf der Elektrodenspannung während einer Speisephase weist der Verlauf der Elektrodenspannung während der Speisephase im Falle eines im Wesentlichen konstanten Durchflusses einen längeren Bereich mit im Wesentlichen konstant verlaufender Spannung auf, welcher Bereich zu einer Durchflussmessung herangezogen werden kann. Bei schnellen Änderungen des Durchflusses während der Speisephase kann die Elektrodenspannung im eingeschwungenen Zustand auch ansteigen oder abfallen.

Die in Fig. 2 skizzierte Abfolge von Phasen ist beispielhaft. Das Trennen zweier Speisephasen durch eine Ruhephase kann beispielsweise erst nach mehreren Speisephasenwechseln ohne Ruhephase erfolgen. Da die beim Wechseln von einer Speisephase zu einer nächsten Speisephase hervorgerufenen Spannungspulse in guter Näherung eine doppelte Amplitude aufweisen im Vergleich zu Spannungspulsen, welche beim Wechseln zwischen einer Speisephase und einer Ruhephase hervorgerufen werden, ist es erforderlich, bei einer Korrektur von Verläufen der Elektrodenspannung nach einem Wechsel von einer Speisephase zu einer Speisephase beispielsweise einen Faktor 2 mit einzubeziehen. Im Falle von Sättigungseffekten kann der Faktor aufgrund von nichtlinearen Effekten auch von 2 abweichen und unter Heranziehung physikalischer Randbedingungen ermittelt oder abgeschätzt werden.

Die Verläufe der einzelnen Magnetfelder sind beispielhaft. Insbesondere kann zu Beginn einer Phase eine Überspannung an das Spulensystem angelegt werden, damit das Magnetfeld schneller einen Sollzustand erreicht. In diesem Fall kann ein tatsächlicher Magnetfeldverlauf von den in Fig. 2 gezeigten Verläufen abweichen.

Fig. 3 skizziert einen Querschnitt durch ein erfindungsgemäßes magnetisch-induktives Durchflussmessgerät 1 mit einem Messrohr 10; einem Magnetsystem 20 mit Spulensystemen 21 und 22 mit jeweils einem Spulenkern 27, Polschuhen 25 und 26; sowie Messelektroden 31 und 32 zum Erfassen einer im Medium induzierten Spannung. Das Magnetsystem beaufschlagt das Medium im Messrohr 10 mit einem Magnetfeld, welches in Richtung des Pfeils 23 ausgerichtet ist. Das Magnetfeld sowie der Fluss des Mediums durch das Messrohr sorgen für das Entstehen einer Elektrodenspannung in Richtung des Pfeils 33. Das magnetisch-induktive Durchflussmessgerät kann des Weiteren eine Feldrückführung 40 umfassen und/oder eine Impedanzsonde 60 umfassen. Die Messelektroden 31, 32 sowie das Spulensystem 21, 22 sowie die Impedanzsonde sind mit einer Mess-/Betriebsschaltung 50 verbunden, welche Mess-/Betriebsschaltung 50 dazu eingerichtet ist, das Spulensystem, die Messelektroden und gegebenenfalls die Impedanzsonde zu betreiben. Die Impedanzsonde ist dazu eingerichtet, die Impedanz des Mediums zu erfassen. Alternativ oder ergänzend zur Impedanzssonde 60 kann die Mess/Betriebsschaltung 50 eine Schnittstelle S zur Übermittelung bzw. Annahme von Information bezüglich einer extern bestimmten Impedanz des Mediums aufweisen.

### Bezugszeichenliste

- 1: Durchflussmessgerät
- 10: Messrohr
- 20: Magnetsystem
- 21, 22: Spulensystem
- 23: Richtung des Magnetfelds
- 25, 26: Polschuh
- 27: Spulenkern
- 31, 32: Messelektrode
- 33: Richtung der Elektrodenspannung
- 34: Zuleitung
- 40: Feldrückführung
- 50: Mess-/Betriebsschaltung
- 60: Impedanzsonde
- 100: Verfahren zum Betreiben eines Messgeräts
- 101: erster Verfahrensschritt
- 102: zweiter Verfahrensschritt
- 103: dritter Verfahrensschritt
- M: Verlauf der Magnetfelder
- E: Verlauf der Elektrodenspannungen
- S: Schnittstelle

## Patentansprüche

1. Verfahren (100) zum Betreiben eines magnetisch-induktiven Durchflussmessgeräts (1) zur Messung der Durchflussgeschwindigkeit oder des Volumendurchflusses eines Mediums in einem Messrohr (10),
welches magnetisch-induktive Durchflussmessgerät (1) umfasst:
ein Messrohr (10) zum Führen des Mediums;
ein Magnetsystem (20) mit mindestens einem Spulensystem (21, 22) zum Erzeugen eines Magnetfelds im Medium, wobei das Magnetfeld im Wesentlichen senkrecht zu einer Messrohrachse steht, wobei das Magnetfeld durch Anlegen einer elektrischen Spulenspannung an das Spulensystem (21, 22) hervorgerufen wird;
mindestens ein Paar im Messrohr (10) angeordnete Messelektroden (31, 32) zum Erfassen einer durch das Magnetfeld induzierten Elektrodenspannung im Medium, welche Elektrodenspannung im Wesentlichen proportional zur Durchflussgeschwindigkeit und zur Feldstärke des Magnetfelds ist;
eine Mess-/Betriebsschaltung (50) zum Betreiben des Magnetsystems (20) und zum Auswerten der Elektrodenspannung;
wobei während einer Speisephase das Magnetfeld erzeugt und die Elektrodenspannung erfasst wird,
wobei die Speisephase eine Messphase aufweist, in welcher Messphase das Magnetfeld im Wesentlichen konstant ist, wobei ein Messwert der Elektrodenspannung während der Messphase zur Berechnung des Durchflusses des Mediums herangezogen wird;
wobei während einer anschließenden Speisephase ein Magnetfeld umgekehrter Polarität erzeugt wird,
wobei in einem ersten Verfahrensschritt (101) bei einer Auswahl von Speisephasenwechseln zwischen einer vorausgehenden Speisephase und einer anschließenden Speisephase eine Ruhephase eingerichtet wird, in welcher Ruhephase zumindest teilweise keine elektrische Spulenspannung an das Spulensystem (21, 22) angelegt wird;
wobei in einem zweiten Verfahrensschritt (102) die Elektrodenspannung während der Ruhephase erfasst wird;
wobei das Wechseln zwischen unterschiedlichen Phasen das Entstehen eines elektrischen Spannungspulses im Medium verursacht, wobei die Phase eine Speisephase oder eine Ruhephase ist,
wobei in einem dritten Verfahrensschritt (103) eine Information aus einem Spannungspuls der Ruhephase dazu verwendet wird, eine Störung der Elektrodenspannung während einer Speisephase durch einen Spannungspuls während der Speisephase zu ermitteln,
wobei nach Ermitteln der Störung der Verlauf der Elektrodenspannung während der der Ruhephase vorausgehenden Speisephase und/oder der der Ruhephase nachfolgenden Speisephase in Abhängigkeit von der Störung korrigiert wird,
wobei eine Korrektur der Störung ein Fitten des Verlaufs eines Spannungspulses mindestens einer Ruhephase beinhaltet,
wobei die Fitfunktion Information über Zeitpunkt und Amplitude eines Spannungspulsmaximums und/oder Verlauf des Amplitudenabfalls des Spannungspulses und/oder Zeitpunkt des Erreichens eines Endzustands und/oder Eigenschaften des Endzustands und/oder eine Pulsbreite des Spannungspulses gibt,
wobei die Störung anhand der durch die Fits gewonnenen Fitparameter ermittelt wird,
wobei der Endzustand ein Zustand eines eingeschwungenen Messsystems ist,
**dadurch gekennzeichnet, dass**
ein Messwert einer ersten Impedanz eines Stromkreises umfassend die Messelektroden (31, 32) sowie Zuleitungen der Messelektroden zur Mess/Betriebsschaltung (50) sowie das Medium und/oder einer zweiten Impedanz des Mediums beim Fitten bzw. bei einer Auswahl der Fitfunktion herangezogen wird.

2. Verfahren (100) nach Anspruch 1,
wobei eine gemittelte Störung durch Mittelung der ermittelten Störungen mindestens zweier Ruhephasen berechnet wird, wobei nach Berechnen der gemittelten Störung der Verlauf der Elektrodenspannung einer Speisephase korrigiert wird.

3. Verfahren (100) nach einem der vorigen Ansprüche,
wobei die Elektrodenspannung während der Speisephase bzw. während der Ruhephase mindestens zweimal, und insbesondere mindestens zwanzigmal und bevorzugt mindestens fünfzigmal abgetastet wird.

4. Verfahren (100) nach einem der vorigen Ansprüche,
wobei eine Korrektur der Störung eine Subtraktion eines Verlaufs eines Spannungspulses einer Ruhephase von einem Verlauf der Elektrodenspannung während einer Speisephase beinhaltet.

5. Verfahren (100) nach einem der vorigen Ansprüche,
wobei der Fit zumindest in einem ersten Zeitintervall auf eine Funktion mit einem globalen Extremum, beispielsweise eine Gaußfunktion zurückgreift.

6. Verfahren (100) nach einem der vorigen Ansprüche,
wobei der Fit zumindest in einem zweiten Zeitintervall auf eine monoton fallende Funktion, beispielsweise eine Potenzfunktion zurückgreift.

7. Verfahren (100) nach einem der vorigen Ansprüche,
wobei die Fitfunktion bzw. Fitfunktionsparameter aus einer Look-Up-Table gewählt werden.

8. Verfahren (100) nach Anspruch 7,
wobei der Messwert der ersten Impedanz mittels der Messelektroden und/oder wobei der Messwert der zweiten Impedanz mittels einer Impedanzsonde (60) bestimmt wird.

9. Verfahren (100) nach einem der vorigen Ansprüche,
wobei mindestens gerätetypischer und/oder ein exemplartypischer und/oder ein applikationsspezifischer Parameter beim Fitten bzw. bei der Auswahl der Fitfunktion herangezogen wird.

10. Verfahren (100) nach einem der vorigen Ansprüche,
wobei bei jedem n-ten Speisephasenwechsel eine Ruhephase eingerichtet wird, wobei n eine positive natürliche Zahl ist, wobei n wählbar ist, wobei ein Auswahlkriterium ein Durchfluss bzw. eine Durchflussänderung des Mediums ist.

11. Verfahren (100) nach einem der vorigen Ansprüche,
wobei die Beträge der Magnetfelder der Messphasen benachbarter Speisephasen weniger als 1% und insbesondere weniger als 0.1 % voneinander abweichen.

12. Verfahren (100) nach einem der Ansprüche 3 bis 11,
wobei die der Berechnung der gemittelten Störung zugrundeliegenden Ruhephasen der ersten Speisephase vorausgehen.

13. Verfahren (100) nach einem der Ansprüche 3 bis 11,
wobei die der Berechnung der gemittelten Störung zugrundeliegenden Ruhephasen der Speisephase zumindest teilweise vorausgehen,
wobei die der Berechnung der gemittelten Störung zugrundeliegenden Ruhephasen der Speisephase zumindest teilweise nachfolgen.

14. Verfahren (100) nach einem der vorigen Ansprüche,
wobei eine Differenz von korrigierten Messwerten der Elektrodenspannung bzw. eine Differenz korrigierter Elektrodenspannungen der Messphasen zweier aufeinanderfolgender Speisephasen oder einer Messphase und einer der Messphase vorausgehenden oder nachfolgenden Ruhephase dazu verwendet wird, einen Durchflussmesswert zu ermitteln.

15. Magnetisch-induktives Durchflussmessgerät (1) zur Messung der Durchflussgeschwindigkeit oder des Volumendurchflusses eines Mediums in einem Messrohr (10) umfassend:
ein Messrohr (10), welches dazu eingerichtet ist, das Medium zu führen;
ein Magnetsystem (20) mit mindestens einem Spulensystem (21, 22), welches Magnetsystem (20) dazu eingerichtet ist, ein Magnetfeld im Medium zu erzeugen, wobei das Magnetfeld im Wesentlichen senkrecht zu einer Messrohrachse steht;
mindestens ein Paar im Messrohr (10) angeordnete Messelektroden (31, 32), welche dazu eingerichtet sind, eine durch das Magnetfeld induzierte Spannung im Medium zu erfassen, welche Spannung im Wesentlichen proportional zur Durchflussgeschwindigkeit und zur Feldstärke des Magnetfelds ist;
eine Mess-/Betriebsschaltung (50), welche dazu eingerichtet ist, das Verfahren (100) nach einem der vorigen Ansprüche umzusetzen.

16. Durchflussmessgerät (1) nach Anspruch 15,
wobei das Durchflussmessgerät eine Impedanzsonde (60) zum Erfassen der zweiten Impedanz des Mediums aufweist, wobei die Mess-/Betriebsschaltung (50) dazu eingerichtet ist, die Impedanzsonde (60) zu betreiben.

17. Durchflussmessgerät (1) nach Anspruch 15 oder 16,
wobei die Mess/Betriebsschaltung (50) eine Schnittstelle (S) zur Übermittelung bzw. Annahme von Information bezüglich einer extern bestimmten Impedanz des Mediums aufweist.

## Claims

1. Procedure (100) for the operation of an electromagnetic flowmeter (1) designed to measure the flow velocity or the volume flow of a medium in a measuring tube (10), said electromagnetic flowmeter (1) comprising:
a measuring tube (10) designed to conduct the medium;
a magnet system (20) comprising at least a coil system (21, 22) designed to generate a magnetic field in the medium, wherein the magnetic field is essentially perpendicular to a measuring tube axis, wherein the magnetic field is caused by the application of an electrical coil voltage to the coil system (21, 22);
at least a pair of measuring electrodes (31, 32) arranged in the measuring tube (10), said electrodes being designed to measure an electrode voltage induced in the medium by the magnetic field, wherein said electrode voltage is essentially proportional to the flow velocity and the intensity of the magnetic field;
a measuring/operation circuit (50) designed to operate the magnet system (20) and to evaluate the electrode voltage;
wherein the magnetic field is generated and the electrode voltage is detected during a feed-in phase,
wherein the feed-in phase has a measuring phase in which the magnetic field is essentially constant, wherein a measured value of the electrode voltage is used to calculate the flow of the medium during the measuring phase;
wherein a magnetic field of reverse polarity is generated during a subsequent feed-in phase,
wherein a rest phase is established in a first procedural step (101) when selecting feed-in phase changes between a preceding feed-in phase and a subsequent feed-in phase, wherein no electrical coil voltage is applied to the coil system (21, 22) in said rest phase;
wherein, in a second procedural step (102), the electrode voltage is measured during the rest phase;
wherein the change between different phases causes an electrical voltage pulse to occur in the medium, wherein the phase is a feed-in phase or a rest phase,
wherein, in a third procedural step (103), information from a voltage pulse of the rest phase is used to determine an electrode voltage disturbance during a feed-in phase caused by a voltage pulse during the feed-in phase,
wherein, once the disturbance has been detected, the curve of the electrode voltage during the feed-in phase preceding the rest phase and/or the feed-in phase following the rest phase is corrected depending on the disturbance,
wherein a correction of the disturbance comprises a curve-fit of the curve of a voltage pulse of at least a rest phase,
wherein the curve-fit function provides information about the time and amplitude of a voltage pulse maximum and/or of the curve of a drop in the amplitude of the voltage pulse and/or the time a final state is reached, and/or properties of the final state and/or a pulse width of the voltage pulse,
wherein the disturbance is determined on the basis of the curve-fit parameters obtained during the curve-fit,
wherein the final state is a state in which the measuring system is stable,
**characterized in that**
a measured value of a first impedance of an electrical circuit, comprising the measuring electrodes (31, 32), feed lines of the measuring electrodes to the measuring/operation circuit (50,) and the medium, and/or a measured value of a second impedance of the medium are used for the curve-fit or to select the curve-fit function.

2. Procedure (100) as claimed in Claim 1,
wherein a mean disturbance is calculated by getting the mean of the determined disturbances of at least two rest phases,
wherein, after calculating the mean disturbance, the curve of the electrode voltage of a feed-in phase is corrected.

3. Procedure (100) as claimed in one of the previous claims,
wherein, during the feed-in phase or during the rest phase, the electrode voltage is scanned at least twice, and particularly at least twenty times and preferably at least fifty times.

4. Procedure (100) as claimed in one of the previous claims,
wherein a disturbance correction comprises subtracting a curve of a voltage pulse of a rest phase from a curve of the electrode voltage during a feed-in phase.

5. Procedure (100) as claimed in one of the previous claims,
wherein, at least in a first time interval, the curve-fit relies on a function with a global extreme, for example a Gaussian function.

6. Procedure (100) as claimed in one of the previous claims,
wherein, at least in a second time interval, the curve-fit relies on a function which drops monotonically, for example a power function.

7. Procedure (100) as claimed in one of the previous claims,
wherein the curve-fit function or the curve-fit function parameters are selected from a look-up table.

8. Procedure (100) as claimed in Claim 7,
wherein the measured value of the first impedance is determined using the measuring electrodes and/or wherein the measured value of the second impedance is determined using an impedance probe (60).

9. Procedure (100) as claimed in one of the previous claims,
wherein at least a device-specific and/or a specimen-specific and/or an application-specific parameter is used for the curve-fit or for selecting the curve-fit function.

10. Procedure (100) as claimed in one of the previous claims,
wherein a rest phase is established for every nth feed-in phase change, where n is a positive natural number and where n can be selected, wherein a flow or a flow change of the medium is a selection criterion.

11. Procedure (100) as claimed in one of the previous claims,
wherein the values of the magnetic fields of the measuring phases of neighboring feed-in phases deviate from one another by less than 1% and particularly by less than 0.1%.

12. Procedure (100) as claimed in one of the Claims 3 to 11,
wherein the rest phases used to calculate the mean disturbance precede the first feed-in phase.

13. Procedure (100) as claimed in one of the Claims 3 to 11,
wherein the rest phases used to calculate the mean disturbance at least partially precede the feed-in phase,
wherein the rest phases used to calculate the mean disturbance at least partially follow the feed-in phase.

14. Procedure (100) as claimed in one of the previous claims,
wherein a difference of corrected measured values of the electrode voltage or a difference of corrected electrode voltages of the measuring phases of two subsequent feed-in phases or of one measuring phase and of a rest phase preceding or following the measuring phase is used to determine a flow measured value.

15. Electromagnetic flowmeter (1) designed to measure the flow velocity or the volume flow of a medium in a measuring tube (10), said flowmeter comprising:
a measuring tube (10), which is designed to conduct the medium;
a magnet system (20) with at least one coil system (21, 22), the magnet system (20) being designed to generate a magnetic field in the medium, wherein the magnetic field is essentially perpendicular to a measuring tube axis;
at least one pair of measuring electrodes (31, 32) arranged in the measuring tube (10), said electrodes being designed to measure a voltage induced in the medium by the magnetic field, wherein said voltage is essentially proportional to the flow velocity and to the intensity of the magnetic field;
a measuring/operation circuit (50), wherein said circuit is designed to implement the procedure (100) as claimed in one of the previous claims.

16. Electromagnetic flowmeter (1) as claimed in Claim 15,
wherein the flowmeter comprises an impedance probe (60) designed to measure the second impedance of the medium, wherein the measuring/operation circuit (50) is designed to operate the impedance probe (60).

17. Electromagnetic flowmeter (1) as claimed in Claim 15 or 16,
wherein the measuring/operation circuit (50) comprises an interface (S) designed to transmit or receive information regarding an impedance of the medium determined externally.

## Revendications

1. Procédé (100) destiné à l'exploitation d'un débitmètre électromagnétique (1) destiné à la mesure de la vitesse d'écoulement ou du débit volumique d'un produit dans un tube de mesure (10),
lequel débitmètre électromagnétique (1) comprend :
un tube de mesure (10) destiné à acheminer le produit ;
un système magnétique (20) comprenant au moins un système de bobines (21, 22) destiné à générer un champ magnétique dans le produit, le champ magnétique étant pour l'essentiel perpendiculaire à un axe de tube de mesure, le champ magnétique étant provoqué par l'application d'une tension électrique de bobine au système de bobines (21, 22) ;
au moins une paire d'électrodes de mesure (31, 32) disposées dans le tube de mesure (10), lesquelles électrodes sont destinées à mesurer une tension d'électrode induite par le champ magnétique dans le produit, laquelle tension d'électrode est pour l'essentiel proportionnelle à la vitesse d'écoulement et à l'intensité du champ magnétique ;
un circuit de mesure / d'exploitation (50) destiné à exploiter le système magnétique (20) et à interpréter la tension d'électrode ;
le champ magnétique étant généré et la tension d'électrode étant détectée pendant une phase d'alimentation,
la phase d'alimentation comprenant une phase de mesure, phase de mesure dans laquelle le champ magnétique est pour l'essentiel constant, une valeur mesurée de la tension d'électrode pendant la phase de mesure étant utilisée pour calculer le débit du produit ;
un champ magnétique de polarité inverse étant généré pendant une phase d'alimentation consécutive,
une phase de repos étant établie, dans une première étape de procédé (101), dans le cas d'une sélection de changements de phase d'alimentation entre une phase d'alimentation précédente et une phase d'alimentation suivante, phase de repos dans laquelle au moins partiellement aucune tension de bobine électrique n'est appliquée au système de bobines (21, 22) ;
la tension d'électrode pendant la phase de repos étant mesurée dans une deuxième étape du procédé (102) ;
le changement entre différentes phases provoquant l'apparition d'une impulsion de tension électrique dans le produit, la phase étant une phase d'alimentation ou une phase de repos,
une information provenant d'une impulsion de tension de la phase de repos étant utilisée, dans une troisième étape de procédé (103), pour déterminer une perturbation de la tension d'électrode pendant une phase d'alimentation par une impulsion de tension pendant la phase d'alimentation,
après la détermination de la perturbation, l'allure de la tension d'électrode pendant la phase d'alimentation précédant la phase de repos et/ou la phase d'alimentation suivant la phase de repos étant corrigée en fonction de la perturbation,
une correction de la perturbation comprenant un ajustement de l'allure d'une impulsion de tension d'au moins une phase de repos,
la fonction d'ajustement fournissant des informations sur le moment et l'amplitude d'un maximum d'impulsion de tension et/ou l'allure de la chute d'amplitude de l'impulsion de tension et/ou le moment de l'atteinte d'un état final et/ou les propriétés de l'état final et/ou une largeur de l'impulsion de tension,
la perturbation étant déterminée sur la base des paramètres d'ajustement obtenus par les ajustements,
l'état final étant un état d'un système de mesure à l'état stable,
**caractérisé en ce que**
une valeur mesurée d'une première impédance d'un circuit comprenant les électrodes de mesure (31, 32) ainsi que les conducteurs des électrodes de mesure vers le circuit de mesure / d'exploitation (50,) ainsi que le produit et/ou une seconde impédance du produit sont utilisés dans l'ajustement ou dans une sélection de la fonction d'ajustement.

2. Procédé (100) selon la revendication 1,
pour lequel une perturbation moyenne est calculée en faisant la moyenne des perturbations déterminées d'au moins deux phases de repos,
pour lequel, après le calcul de la perturbation moyenne, l'allure de la tension d'électrode d'une phase d'alimentation est corrigée.

3. Procédé (100) selon l'une des revendications précédentes,
pour lequel la tension d'électrode est échantillonnée au moins deux fois, et notamment au moins vingt fois et de préférence au moins cinquante fois, respectivement pendant la phase d'alimentation et pendant la phase de repos.

4. Procédé (100) selon l'une des revendications précédentes,
pour lequel une correction de la perturbation comprend une soustraction entre une allure d'une impulsion de tension d'une phase de repos et une allure de la tension d'électrode pendant une phase d'alimentation.

5. Procédé (100) selon l'une des revendications précédentes,
pour lequel l'ajustement, au moins dans un premier intervalle de temps, repose sur une fonction présentant un extremum global, par exemple une fonction gaussienne.

6. Procédé (100) selon l'une des revendications précédentes,
pour lequel l'ajustement, au moins dans un deuxième intervalle de temps, repose sur une fonction à décroissance monotone, par exemple une fonction de puissance.

7. Procédé (100) selon l'une des revendications précédentes,
pour lequel la fonction d'ajustement ou les paramètres de la fonction d'ajustement sont sélectionnés à partir d'un tableau de correspondance E+H.

8. Procédé (100) selon la revendication 7,
pour lequel la valeur mesurée de la première impédance est déterminée au moyen des électrodes de mesure et/ou pour lequel la valeur mesurée de la seconde impédance est déterminée au moyen d'une sonde d'impédance (60).

9. Procédé (100) selon l'une des revendications précédentes,
pour lequel au moins un paramètre spécifique à l'appareil et/ou un paramètre spécifique à l'exemplaire et/ou un paramètre spécifique à l'application est utilisé dans l'ajustement ou lors de la sélection de la fonction d'ajustement.

10. Procédé (100) selon l'une des revendications précédentes,
pour lequel une phase de repos est établie à chaque nième changement de phase d'alimentation, n étant un nombre naturel positif et n pouvant être sélectionné, un critère de sélection étant un débit ou un changement de débit du produit.

11. Procédé (100) selon l'une des revendications précédentes,
pour lequel les valeurs d'intensité des champs magnétiques des phases de mesure de phases d'alimentation adjacentes diffèrent les unes des autres de moins de 1 % et notamment de moins de 0,1 %.

12. Procédé (100) selon l'une des revendications 3 à 11,
pour lequel les phases de repos utilisées pour le calcul de la perturbation moyenne précèdent la première phase d'alimentation.

13. Procédé (100) selon l'une des revendications 3 à 11,
pour lequel les phases de repos utilisées pour le calcul de la perturbation moyenne précèdent au moins partiellement la phase d'alimentation,
pour lequel les phases de repos utilisées pour le calcul de la perturbation moyenne suivent au moins partiellement la phase d'alimentation.

14. Procédé (100) selon l'une des revendications précédentes,
pour lequel une différence de valeurs mesurées corrigées de la tension d'électrode ou une différence de tensions d'électrode corrigées des phases de mesure de deux phases d'alimentation successives ou d'une phase de mesure et d'une phase de repos précédant ou suivant la phase de mesure est utilisée pour déterminer une valeur mesurée de débit.

15. Débitmètre électromagnétique (1) destiné à la mesure de la vitesse d'écoulement ou du débit volumique d'un produit dans un tube de mesure (10), lequel débitmètre comprend :
un tube de mesure (10), lequel est conçu pour acheminer le produit ;
un système magnétique (20) avec au moins un système de bobines (21, 22), le système magnétique (20) étant conçu pour générer un champ magnétique dans le produit, le champ magnétique étant pour l'essentiel perpendiculaire à un axe de tube de mesure ;
au moins une paire d'électrodes de mesure (31, 32) disposées dans le tube de mesure (10), lesquelles électrodes sont conçues pour mesurer une tension induite dans le produit par le champ magnétique, laquelle tension est pour l'essentiel proportionnelle à la vitesse d'écoulement et à l'intensité du champ magnétique ;
un circuit de mesure / d'exploitation (50), lequel circuit est conçu pour mettre en oeuvre le procédé (100) selon l'une des revendications précédentes.

16. Débitmètre électromagnétique (1) selon la revendication 15,
pour lequel le débitmètre comprend une sonde d'impédance (60) destinée à détecter la deuxième impédance du produit, le circuit de mesure / d'exploitation (50) étant conçu pour exploiter la sonde d'impédance (60).

17. Débitmètre électromagnétique (1) selon la revendication 15 ou 16,
pour lequel le circuit de mesure / d'exploitation (50) comprend une interface (S) destinée à transmettre ou à recevoir des informations relatives à une impédance du produit déterminée en externe.
